# EUROPEAN PATENT SPECIFICATION

(11) **EP 4 365 000 B1**
(45) Date of publication and mention of the grant of the patent: **26.11.2025**
(21) Application number: 23206632.4
(22) Date of filing: 30.10.2023
(51) Int. Cl.: B60K 35/00, B60K 35/22, B60K 35/28, B60K 35/53, B60K 35/60

(54) **CONTROL PANEL WITH A REVERSIBLE SCREEN FOR A VEHICLE**
BEDIENTAFEL MIT UMKEHRBAREM BILDSCHIRM FÜR EIN FAHRZEUG
TABLEAU DE COMMANDE AVEC ÉCRAN RÉVERSIBLE POUR VÉHICULE

(30) Priority: 04.11.2022 IT 202200022764
(43) Date of publication of application: 08.05.2024
(73) Proprietor: FERRARI S.p.A., 41100 Modena (IT)
(72) Inventor: IVE, Jonathan P., SAN FRANCISCO, 94124 (US); WHANG, Eugene, SAN FRANCISCO, 94124 (US); BATAILLOU, Jeremy, SAN FRANCISCO, 94124 (US); ASHCROFT, Anthony, SAN FRANCISCO, 94124 (US); ZHOU, Suhang, SAN FRANCISCO, 94124 (US); LOUZAOUEN, Benoit, SAN FRANCISCO, 94124 (US); KISS, Jemima, SAN FRANCISCO, 94124 (US); WILSON, Christopher, SAN FRANCISCO, 94124 (US); WAN, Wan Si, SAN FRANCISCO, 94124 (US); NATERA, Biotz, SAN FRANCISCO, 94124 (US); MCGRATH, James, SAN FRANCISCO, 94124 (US); GUYETT, Roger, SAN FRANCISCO, 94124 (US); LUXTON, Joseph, SAN FRANCISCO, 94124 (US); MATAS, Michael, SAN FRANCISCO, 94124 (US); KESSLER, Patrick, SAN FRANCISCO, 94124 (US); ROMANI, Maximilian, 41100 MODENA (IT); CONIGLIARO, Vito, 41100 MODENA (IT); LANZAVECCHIA, Matteo, 41100 MODENA (IT)
(74) Representative: Studio Torta S.p.A.

(56) References cited:
- EP-B1- 3 138 722
- US-A1- 2005 212 669
- US-B1- 6 568 345

## Description

### CROSS-REFERENCE TO RELATED APPLICATIONS

This patent application claims priority from Italian patent application no. 102022000022764 filed on November 4, 2022.

### TECHNICAL FIELD

The present invention relates to a control panel for a vehicle.

The present invention can be advantageously implemented in the control panel of a car, to which the following description will make explicit reference without any consequent loss in generality.

### PRIOR ART

A car comprises a dashboard, which constitutes the front wall of the passenger compartment located below the windscreen. The dashboard supports a control panel, which is arranged in front of the driver immediately behind the steering wheel.

In the past, the control panel only comprised analogue instruments with needles and a few indicator lights; gradually small digital screens appeared, which over time became increasingly larger and more defined to show images of increasing complexity until they became fully programmable. Digital displays initially replaced the odometer and some indicator lights, subsequently they replaced the secondary analogue instruments (such as, for example, the residual fuel indicator and the clock), and finally in some cases they replaced the main analogue instruments (i.e. the speedometer and rev counter) as well, thus realizing a fully digital instrumentation.

The fully digital instrumentation is normally greatly appreciated in *"relaxed"* driving (particularly in the city) since, being fully programmable, it allows useful driving information to be highlighted (for example, the speed of the vehicle, which is indispensable information for complying with the limits imposed by the law, and the navigation system) in such a manner that the useful driving information is readily and immediately readable without it being necessary to take one's eyes off the road for too long. However, the fully digital instrumentation is generally less appreciated in *"sports"* driving, particularly in track driving, inasmuch as it is deemed harder to read with immediacy (i.e. it requires more attention to acquire the information displayed by the instrumentation, as a quick glance is generally not sufficient).

In the high-performance sports cars currently in production, a compromise is normally chosen which provides the presence of a single analogue instrument that indicates the rpm of the engine (i.e. a rev counter) flanked by one or two digital screens; however, this solution is a compromise that generally adversely affects both the analogue instrument (which cannot be very large so as not to take away too much space from the digital screens) and the digital screens (which necessarily have relatively small dimensions so as not to overlap with the analogue instrument and are thus poorly suited to showing a detailed map navigation system, which, however, is highly appreciated especially in city driving).

The patent EP3138722B1 describes a control panel comprising a digital screen and an analogue instrument provided with a circular support element and a needle that moves within the support element; the analogue instrument is movable so as to be arranged only when needed in a working position, in which the analogue instrument overlaps the digital screen in such a manner that the support element of the analogue instrument covers a corresponding part of said digital screen.

The patent application US2005212669A1 describes a display apparatus for a vehicle comprising a screen with a plurality of display areas.

The patent US6568345B1 describes a control panel comprising multiple instrument clusters with differently arranged display devices. The instrument clusters are mounted on a single support or frame, which is mounted in a rotary manner so as to be selectable and viewable one at a time behind a display surface.

### DESCRIPTION OF THE INVENTION

The object of the present invention is to provide a control panel for a vehicle which allows information to be displayed in a manner that the driver can, in all driving situations, obtain the data he or she needs with a minimum amount of distraction.

According to the present invention, a control panel for a vehicle is provided as claimed in the accompanying claims.

The claims describe preferred embodiments of the present invention and form an integral part of the present description.

### BRIEF DESCRIPTION OF THE DRAWINGS

The present invention will now be described with reference to the accompanying figures, which illustrate nonlimiting embodiments thereof, wherein:
- Figure 1 is a schematic view of part of a dashboard of a car provided with a control panel realized according to the present invention;
- Figure 2 is a schematic, perspective and exploded view of a part of the control panel of Figure 1;
- Figures 3 and 4 are two schematic front views of a part of the control panel of Figure 1 in two different configurations;
- Figures 5 and 6 are two schematic front views of a part of a first variant of the control panel of Figure 1 in two different configurations;
- Figures 7 and 8 are two schematic front views of a part of a second variant of the control panel of Figure 1 in two different configurations;
- Figures 9 and 10 are two schematic front views of a part of a third variant of the control panel of Figure 1 in two different configurations; and
- Figures 11 and 12 are two schematic front views of a part of a fourth variant of the control panel of Figure 1 in two different configurations.

### PREFERRED EMBODIMENTS OF THE INVENTION

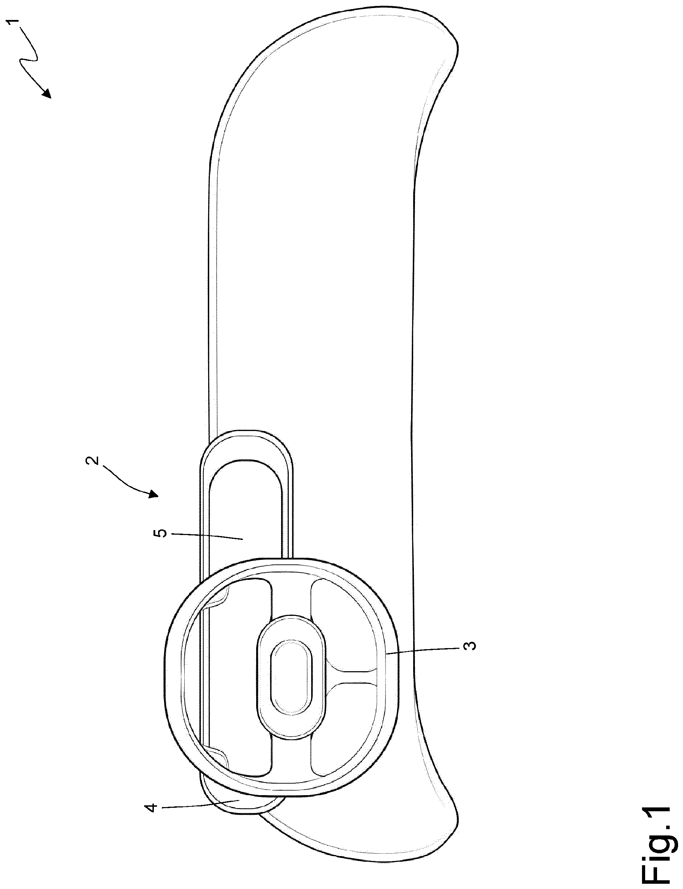

In Figure 1, the reference number 1 indicates, as a whole, the dashboard of a car.

The dashboard 1 supports a control panel 2, which is arranged in front of the driver behind a steering wheel 3. In particular, the control panel 2 is arranged above a support body that internally houses the steering column (i.e. the element at one end of which the steering wheel 3 is mounted).

The control panel 2 comprises a box-type housing 4, which has a substantially parallelepiped shape (having rounded edges) and is cup-shaped in order to contain all components of the control panel 2 within it; in particular, the housing 4 has an open end that faces the steering wheel 3 (i.e. the driver) and is closed by a transparent panel 5 that reproduces the shape of the housing 4 so as to engage the entire area of the housing 4. According to a preferred embodiment, the housing 4 comprises a connecting element that protrudes cantilevered from a lower wall of the housing 4 and is configured to attach the housing 4 to the dashboard 1 of the vehicle; in particular, the connecting element is a ring that is fit around a cylindrical support of the dashboard 1.

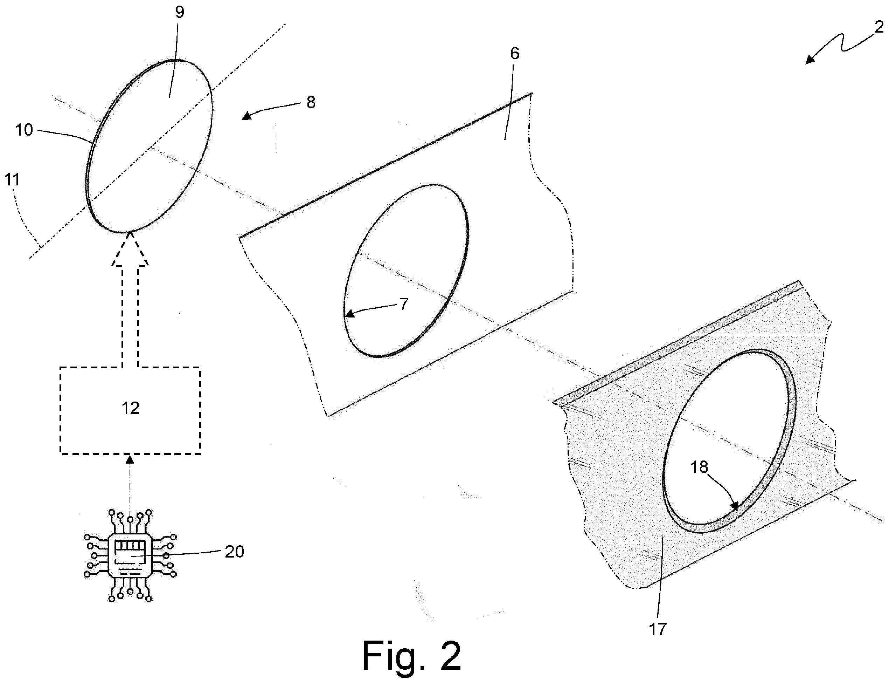

According to the illustration shown in Figure 2, the control panel 2 comprises a flat main body 6 (i.e. a plate) which is fixed inside the housing 4 below the transparent panel 5 (i.e. at a certain distance from the transparent panel 5) and reproduces the shape of the housing 4 in order to engage the entire area of the housing 4. The main body 6 has a single through opening 7 that is obtained within the main body 6 and is completely surrounded by the main body 6.

According to a preferred embodiment illustrated in the accompanying figures, the through opening 7 obtained through the main body 6 has a circular (round) shape; according to a different embodiment not illustrated, the through opening 7 obtained through the main body 6 has a shape different from a round shape (e.g., a rectangular shape, an elliptical shape, or a polygonal shape).

According to the illustration shown in Figure 2, the control panel 2 comprises a flat secondary body 8 (i.e. a plate) which has the same shape and (substantially) the same size as the through opening 7 of the main body 6, has a face 9 and a face 10 opposite one another, and is arranged in the area of the through opening 7 of the main body 6 (i.e. is arranged through the through opening 7 of the main body 6 in order to be completely visible through the through opening 7 of the main body 6).

The secondary body 8 is mounted in a rotary manner in order to rotate around a rotation axis 11 (and inside the through aperture 7) so that, by rotating each time by 180° around the rotation axis 11, the secondary body 8 shows, through the through opening 7 of the main body 6, its face 9 or, alternatively, its face 10. The rotation axis 11 is coplanar with the main body 6, i.e. it lies in the main body 6. In other words, the secondary body 8 is able to rotate around the rotation axis 11 inside the through opening 7, therefore the secondary body 8 has a size that is substantially the same (to minimize the clearance) as a size of the through opening 7 but is in fact slightly smaller than the size of the through opening 7 in order to allow the rotation of the secondary body 8 inside the through opening 7.

In the embodiment illustrated in the accompanying figures, the rotation axis 11 is horizontal; alternatively, the rotation axis 11 can be vertical or inclined (e.g., 45°) with respect to either the horizontal or the vertical.

According to the illustration shown in Figure 2, the control panel 2 comprises an actuator device 12 (typically an electric motor), which is configured to rotate the secondary body 8 around the rotation axis 11 with rotations having, each time, an angular range of 180° (thus intended to cyclically invert the face 9 or 10 facing the through opening 7 of the main body 6, i.e. visible through the through opening 7 of the main body 6).

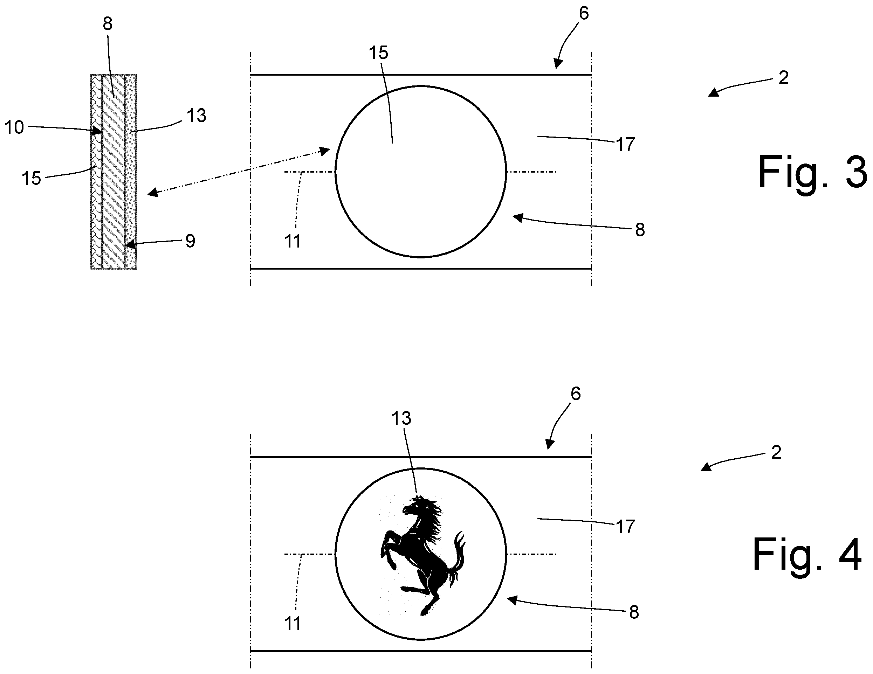

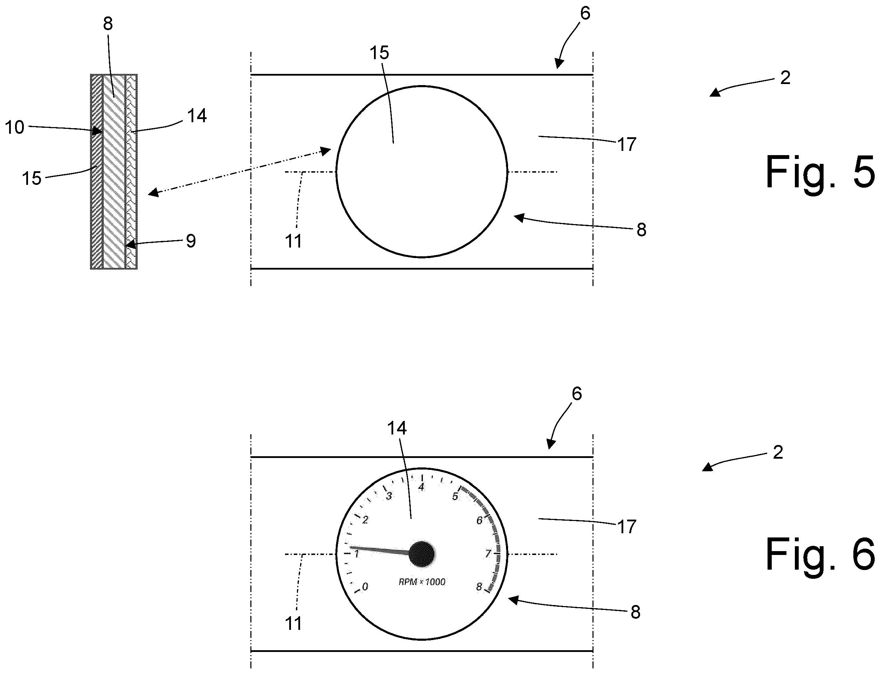

The face 9 of the secondary body 8 can support a potentially embossed printed image 13 or a predefined graphic representation that is static, i.e. not modifiable in any way as illustrated in Figures 3 and 4. Alternatively, the face 9 of the secondary body 8 can support an analogue instrument 14 provided with at least one needle as illustrated in Figures 5-12.

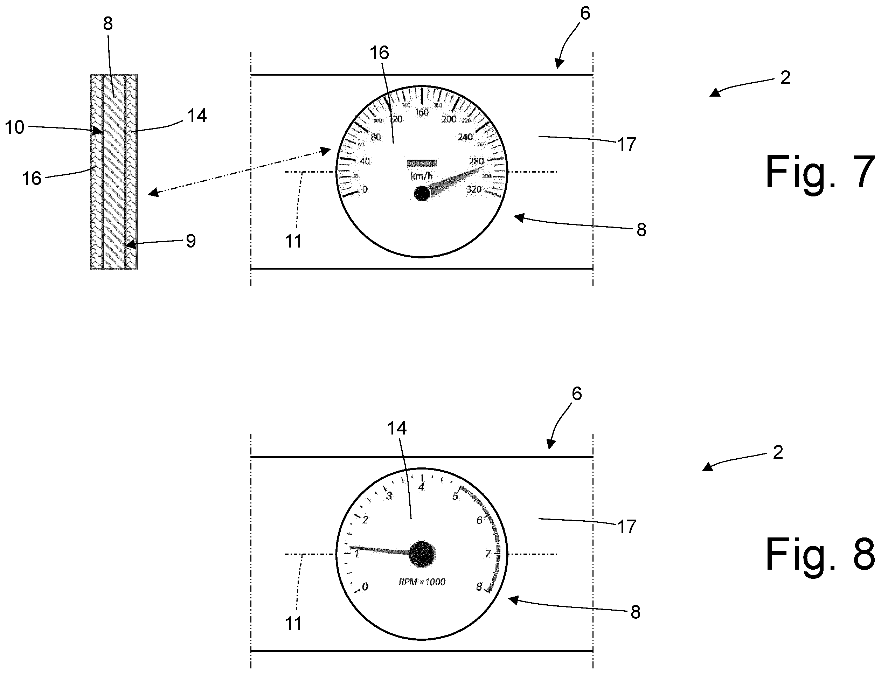

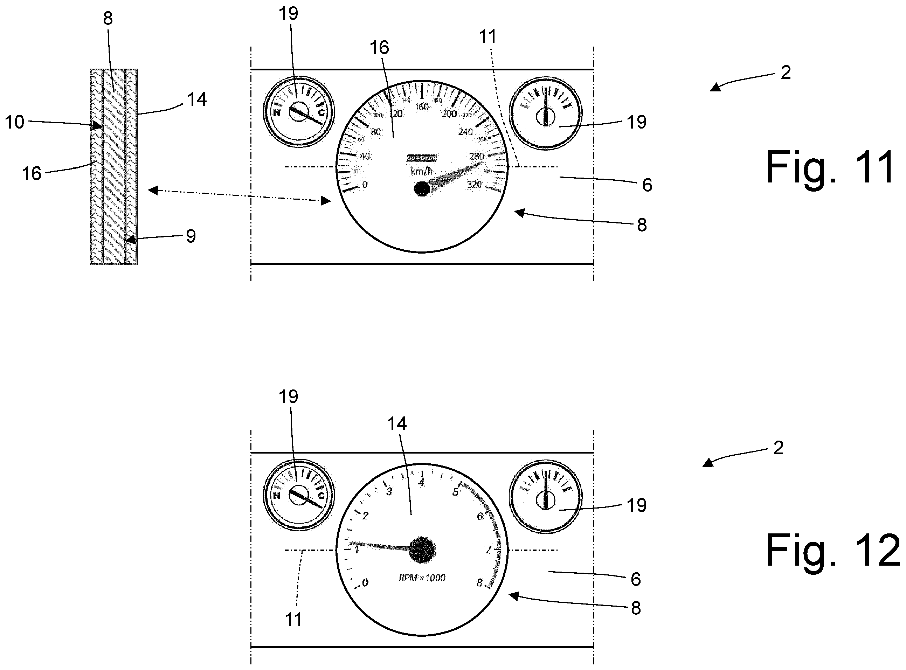

The face 10 of the secondary body 8 can support a digital screen 15 (for example produced with LED technology or OLED technology) as illustrated in Figures 3, 5 and 9; preferably, the digital screen 15 takes up the entire surface area of the face 10 of the secondary body 8 and thus has the same shape and the same size as the secondary body 8. Alternatively, the face 10 of the secondary body 8 can support an analogue instrument 16, which is provided with at least one needle and is different and independent from the analogue instrument 14 supported by the face 9 as illustrated in Figures 7 and 11.

As illustrated in Figures 2-8, the main body 6 can support at least one digital screen 17 (for example produced with LED technology or OLED technology), which overlaps the through opening 7 of the main body 6 and has its own through opening 18 (illustrated in Figure 2), which is completely surrounded by the digital screen 17, is aligned with the through opening 7 of the main body 6 and has the same shape and the same size as the through opening 7 (so that the through opening 7 of the main body 6 and thus the secondary body 8 located at the through opening 7 are completely visible through the through opening 18 of the digital screen 17). According to a different embodiment not illustrated, the digital screen 17 supported by the main body 6 is arranged beside the through opening 7 of the main 6 body without overlapping the through opening 7 (the digital screen 17 thus does not have any through openings 18 because it does not overlap the through opening 7 of the main body 6); in this case, there could be two (or more) digital screens 17 present, supported by the main body 6 and arranged beside the through opening 7 of the main body 6 without overlapping the through opening 7.

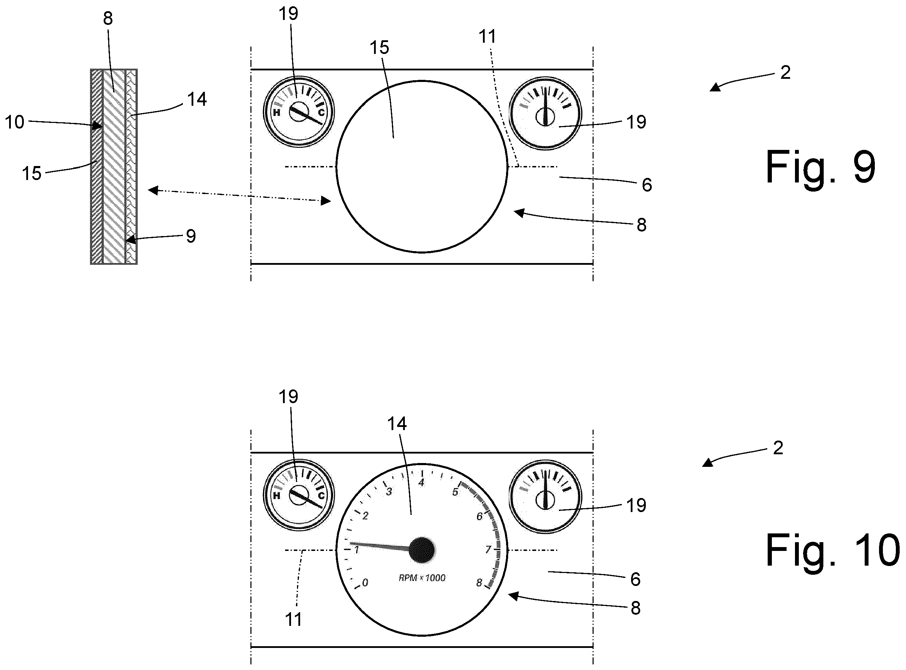

According to the embodiment illustrated in Figures 9-12, the main body 6 supports at least one analogue instrument 19, which is provided with at least one needle and is arranged beside the through opening 7 of the main body 6 without overlapping the through opening 7. In this embodiment, the main body 6 can also support the digital screen 17 arranged beside the through opening 7 of the main body 6 and the analogue instrument 19 (i.e. not overlapping the through opening 7 of the main body 6 and the analogue instrument 19) or, alternatively, the main body 6 does not include the digital screen 17 (i.e. supports only the analogue instruments 19). Moreover, in this embodiment, the face 9 of the secondary body 8 can support the printed image 13 or can support the analogue instrument 14 (as illustrated in Figures 9-12) while the face 10 of the secondary body 8 can support the digital screen 15 (as illustrated in Figure 9) or can support the analogue instrument 16 (as illustrated in Figure 11).

Summarizing the above, the control panel 2 can have a completely digital version that is encountered when the digital screen 17 that covers (entirely) the visible surface of the main body 6 is flanked by the digital screen 15 carried by the secondary body 8 to form almost seamlessly a digital screen that occupies the entire area of the control panel 2 (as illustrated in Figures 3 and 5).

Summarizing the above, the control panel 2 can have a hybrid version (digital and analogue) in which the digital screen 17 that covers (entirely) the visible surface of the main body 6 is flanked by the analogue instrument 14 or 16 carried by the secondary body 8 (as illustrated in Figures 6, 7 and 8) or in which the digital screen 15 carried by the secondary body 8 is flanked by the analogue instruments 19 mounted on the main body 6 (as illustrated in Figure 9).

Summarizing the above, the control panel 2 can have a completely analogue version in which the analogue instruments 19 mounted on the main body 6 are flanked by the analogue instrument 14 or 16 carried by the secondary body 8 (as illustrated in Figures 10, 11 and 12).

According to the illustration shown in Figure 2, the control panel 2 comprises a control unit 20 configured to arrange the secondary body 8 so as to show, through the through opening 7 of the main body 6, a face 9 or 10 of the secondary body 8 when the vehicle is turned off (i.e. when the vehicle is in the so-called *"KEY-OFF"* condition) and so as to show, through the through opening 7 of the main body 6, the other face 10 or 9 of the secondary body 8 when the vehicle is turned on (i.e. when the vehicle is in the so-called "*KEY-ON"* condition). This control mode is normally used when the face 9 of the secondary body 8 supports the printed image 13 (which distinguishes and identifies the vehicle off condition), but it could also be used when the face 9 of the secondary body 8 supports the analogue instrument 16.

The control unit 20 can be configured to arrange the secondary body 8 so as to show, through the through opening 7 of the main body 6, a face 9 or 10 of the secondary body 8 in a road driving mode (i.e. designed for use on roads open to the public and subject to the limits imposed by the traffic code) and so as to show, through the through opening 7 of the main body 6, the other face 10 or 9 of the secondary body 8 in a performance driving mode (i.e. designed for use in circuit driving). For example, in the embodiment illustrated in Figures 5-6 and 9-10, the digital screen 15 is shown in the road driving mode and the analogue instrument 14 (typically a rev counter) is shown in the performance driving mode; or, in the embodiment illustrated in Figures 7-8 and 11-12, the analogue instrument 16 (typically a speedometer and odometer) is shown in the road driving mode and the analogue instrument 14 (typically a rev counter) is shown in the performance driving mode.

The control unit 20 can be configured to arrange the secondary body 8 in the position desired by the driver independently of the state (turned on or turned off) of the vehicle and independently of the driving mode set by the driver.

According to the embodiment illustrated in the accompanying figures, the main body 6 has a single through opening 7 engaged by the secondary body 8. According to other embodiments not illustrated, the main body 6 has multiple through openings 7 each engaged by a corresponding secondary body 8. For example, there can be a larger through opening 7 arranged in the center and two or more smaller through openings 7 arranged on the sides; or there can be two (or more) larger through openings 7 arranged in the center and possibly some smaller through openings 7 arranged on the sides (also having sizes different from one another).

The above-described control panel 2 can be implemented advantageously in any type of road vehicle (such as a car or a motorcycle) as well as in any type of non-road vehicle.

The above-described control panel 2 has numerous advantages.

First of all, the above-described control panel 2 allows information to be displayed in such a manner that the driver can obtain, in all driving situations, the data he or she needs with a minimum amount of distraction. This result is achieved thanks to the fact that, depending on the driving situation and/or the wishes of the driver, the information can be displayed in a differentiated manner using different display means (by rotating the secondary body 8 by 180°, it is possible to invert the face 9 or 10 of the secondary body 8 visible through the through opening 7 of the main body 6, whereby it is possible to modify the display means arranged in the control panel 2 in front of the driver).

In this regard, it is important to note that the information displayed in a completely digital form can be more complete and more detailed, while the information displayed in an analogue form is less complete and less detailed but perceptible more rapidly (it being sufficient to see the position of the needles without actually reading the numerical scale associated with the needles). It would also be possible to reproduce the needles digitally; however, it has been demonstrated that the visibility of a physical needle is far superior to the visibility of a needle displayed on a digital screen (in particular because the physical needle creates a three-dimensionality that makes it easier to see the physical needle).

In other words, the above-described control panel 2 allows information to be displayed using only the digital screens 15 and 17 when the driver requires the presentation of complex information (typically a map navigation system during *"relaxed"* driving) and also allows an analogue instrument 14 to be used when the driver requires this type of instrumentation for *"sports"* driving. In other words, the above-described control panel 2 is not a bad compromise between the need to have a large digital screen and the conflicting need to also have a large analogue instrument; in fact, the above-described control panel 2 makes it possible to have (at different times) both a large digital screen and an analogue instrument as a function of the wishes of the driver.

Moreover, the above-described control panel 2 has a particularly contained bulk so that it can be integrated in any type of vehicle.

Finally, the above-described control panel 2 has a relatively low production cost inasmuch as it uses simple components that are readily available on the market.

### LIST OF REFERENCE NUMBERS IN THE FIGURES

- 1: dashboard
- 2: control panel
- 3: steering wheel
- 4: housing
- 5: transparent panel
- 6: main body
- 7: through opening
- 8: secondary body
- 9: face
- 10: face
- 11: rotation axis
- 12: actuator device
- 13: printed image
- 14: analogue instrument
- 15: digital screen
- 16: analogue instrument
- 17: digital screen
- 18: through opening
- 19: analogue instrument
- 20: control unit

## Claims

1. A control panel (2) for a vehicle and comprising:
a main body (6) having at least one first through opening (7), which is obtained inside it and is completely surrounded by the main body (6); and
a flat secondary body (8), which has the same shape as the first through opening (7) of the main body (6), has a first face (9) and a second face (10) opposite one another and is arranged in the area of the first through opening (7) of the main body (6);
the control panel (2) is **characterized in that** the secondary body (8) is mounted in a rotary manner in order to rotate around a rotation axis (11) so that, by rotating each time by 180° around the rotation axis (11), the secondary body (8) shows, through the first through opening (7) of the main body (6), its first face (9) or, alternatively, its second face (10).

2. The control panel (2) according to claim 1 and comprising an actuator device (12), which is configured to rotate the secondary body (8) around the rotation axis (11) with rotations having, each time, an angular range of 180°.

3. The control panel (2) according to claim 1 or 2 and comprising a control unit (20) configured to arrange the secondary body (8) so as to show, through the first through opening (7) of the main body (6), a face (9; 10) of the secondary body (8) when the vehicle is turned off and so as to show, through the first through opening (7) of the main body (6), the other face (10; 9) of the secondary body (8) when the vehicle is turned on.

4. The control panel (2) according to claim 1 or 2 and comprising a control unit (20) configured to arrange the secondary body (8) so as to show, through the first through opening (7) of the main body (6), a face (9; 10) of the secondary body (8) in a road driving mode and so as to show, through the first through opening (7) of the main body (6), the other face (10; 9) of the secondary body (8) in a performance driving mode.

5. The control panel (2) according to one of the claims from 1 to 4, wherein the first face (9) of the secondary body (8) supports a printed image (13).

6. The control panel (2) according to one of the claims from 1 to 4, wherein the first face (9) of the secondary body (8) supports at least one first analogue instrument (14) provided with at least one needle.

7. The control panel (2) according to one of the claims from 1 to 4, wherein the first face (9) of the secondary body (8) supports a first digital screen (15).

8. The control panel (2) according to one of the claims from 1 to 7, wherein the second face (10) of the secondary body (8) supports at least one second analogue instrument (16) provided with at least one needle.

9. The control panel (2) according to one of the claims from 1 to 8, wherein the main body (6) supports at least one second digital screen (17), which is arranged beside the first through opening (7) without overlapping the first through opening (7).

10. The control panel (2) according to one of the claims from 1 to 8, wherein the main body (6) supports at least one second digital screen (17), which overlaps the first through opening (7) and has a second through opening (18), which is aligned with the first through opening (7) and has the same shape and the same size as the first through opening (7).

11. The control panel (2) according to one of the claims from 1 to 10, wherein the main body (6) supports at least one third analogue instrument (19), which is provided with at least one needle and is arranged beside the first through opening (7) without overlapping the first through opening (7).

12. The control panel (2) according to one of the claims from 1 to 11 and comprising a main transparent panel (5), which covers the main body (6) and is arranged at a given distance from the main body (6) so as not to interfere with the rotation of the secondary body (8).

## Patentansprüche

1. Bedienfeld (2) für ein Fahrzeug und umfassend:
einen Hauptkörper (6) mit mindestens einer ersten Durchgangsöffnung (7), die in seinem Inneren erhalten ist und vollständig von dem Hauptkörper (6) umgeben ist; und
einen flachen Nebenkörper (8), der die gleiche Form wie die erste Durchgangsöffnung (7) des Hauptkörpers (6) hat, eine erste Fläche (9) und eine zweite Fläche (10) aufweist, die einander gegenüberliegen, und im Bereich der ersten Durchgangsöffnung (7) des Hauptkörpers (6) angeordnet ist;
das Bedienfeld (2) **dadurch gekennzeichnet ist, dass** der Nebenkörper (8) drehbar gelagert ist, um sich um eine Drehachse (11) zu drehen, so dass der Nebenkörper (8), indem er sich jedes Mal um 180° um die Drehachse (11) dreht, durch die erste Durchgangsöffnung (7) des Hauptkörpers (6) hindurch seine erste Fläche (9) oder alternativ seine zweite Fläche (10) zeigt.

2. Bedienfeld (2) nach Anspruch 1 und umfassend eine Aktuatorvorrichtung (12), die dazu konfiguriert ist, den Nebenkörper (8) mit Drehungen, die jedes Mal einen Winkelbereich von 180° haben, um die Drehachse (11) zu drehen.

3. Bedienfeld (2) nach Anspruch 1 oder 2 und umfassend eine Steuereinheit (20), die dazu konfiguriert ist, den Nebenkörper (8) anzuordnen, um durch die erste Durchgangsöffnung (7) des Hauptkörpers (6) eine Fläche (9; 10) des Nebenkörpers (8) zu zeigen, wenn das Fahrzeug ausgeschaltet ist, und um durch die erste Durchgangsöffnung (7) des Hauptkörpers (6) die andere Fläche (10; 9) des Nebenkörpers (8) zu zeigen, wenn das Fahrzeug eingeschaltet ist.

4. Bedienfeld (2) nach Anspruch 1 oder 2 und umfassend eine Steuereinheit (20), die dazu konfiguriert ist, den Nebenkörper (8) anzuordnen, um durch die erste Durchgangsöffnung (7) des Hauptkörpers (6) eine Fläche (9; 10) des Nebenkörpers (8) in einem Straßenfahrmodus zu zeigen, und um durch die erste Durchgangsöffnung (7) des Hauptkörpers (6) die andere Fläche (10; 9) des Nebenkörpers (8) in einem Leistungsfahrmodus zu zeigen.

5. Bedienfeld (2) nach einem der Ansprüche 1 bis 4, wobei die erste Fläche (9) des Nebenkörpers (8) ein Druckbild (13) trägt.

6. Bedienfeld (2) nach einem der Ansprüche 1 bis 4, wobei die erste Fläche (9) des Nebenkörpers (8) mindestens ein erstes analoges Instrument (14) trägt, das mit mindestens einer Nadel versehen ist.

7. Bedienfeld (2) nach einem der Ansprüche 1 bis 4, wobei die erste Fläche (9) des Nebenkörpers (8) einen ersten digitalen Bildschirm (15) trägt.

8. Bedienfeld (2) nach einem der Ansprüche 1 bis 7, wobei die zweite Fläche (10) des Nebenkörpers (8) mindestens ein zweites analoges Instrument (16) trägt, das mit mindestens einer Nadel versehen ist.

9. Bedienfeld (2) nach einem der Ansprüche 1 bis 8, wobei der Hauptkörper (6) mindestens einen zweiten digitalen Bildschirm (17) trägt, der neben der ersten Durchgangsöffnung (7) angeordnet ist, ohne die erste Durchgangsöffnung (7) zu überlappen.

10. Bedienfeld (2) nach einem der Ansprüche 1 bis 8, wobei der Hauptkörper (6) mindestens einen zweiten digitalen Bildschirm (17) trägt, der die erste Durchgangsöffnung (7) überlappt und eine zweite Durchgangsöffnung (18) aufweist, die mit der ersten Durchgangsöffnung (7) fluchtet und die gleiche Form und die gleiche Größe wie die erste Durchgangsöffnung (7) aufweist.

11. Bedienfeld (2) nach einem der Ansprüche 1 bis 10, wobei der Hauptkörper (6) mindestens ein drittes analoges Instrument (19) trägt, das mit mindestens einer Nadel versehen ist und neben der ersten Durchgangsöffnung (7) angeordnet ist, ohne die erste Durchgangsöffnung (7) zu überlappen.

12. Bedienfeld (2) nach einem der Ansprüche 1 bis 11 und umfassend eine transparente Hauptplatte (5), die den Hauptkörper (6) abdeckt und in einem bestimmten Abstand von dem Hauptkörper (6) angeordnet ist, um die Drehung des Nebenkörpers (8) nicht zu stören.

## Revendications

1. Tableau de commande (2) pour un véhicule et comprenant :
un corps principal (6) comportant au moins une première ouverture traversante (7), qui est obtenue à l'intérieur de celui-ci et est complètement entourée par le corps principal (6) ; et
un corps secondaire plat (8), qui a la même forme que la première ouverture traversante (7) du corps principal (6), comporte une première face (9) et une seconde face (10) opposées l'une à l'autre et est disposé dans la zone de la première ouverture traversante (7) du corps principal (6) ;
le tableau de commande (2) est **caractérisé en ce que** le corps secondaire (8) est monté de manière rotative afin de tourner autour d'un axe de rotation (11) de sorte que, en tournant à chaque fois de 180° autour de l'axe de rotation (11), le corps secondaire (8) indique, à travers la première ouverture traversante (7) du corps principal (6), sa première face (9) ou, alternativement, sa seconde face (10).

2. Tableau de commande (2) selon la revendication 1 et comprenant un dispositif actionneur (12), qui est configuré pour faire tourner le corps secondaire (8) autour de l'axe de rotation (11) avec des rotations ayant, à chaque fois, une plage angulaire de 180°.

3. Tableau de commande (2) selon la revendication 1 ou 2 et comprenant une unité de commande (20) configurée pour disposer le corps secondaire (8) de manière à indiquer, à travers la première ouverture traversante (7) du corps principal (6), une face (9 ; 10) du corps secondaire (8) lorsque le véhicule est éteint et de manière à indiquer, à travers la première ouverture traversante (7) du corps principal (6), l'autre face (10 ; 9) du corps secondaire (8) lorsque le véhicule est allumé.

4. Tableau de commande (2) selon la revendication 1 ou 2 et comprenant une unité de commande (20) configurée pour disposer le corps secondaire (8) de manière à indiquer, à travers la première ouverture traversante (7) du corps principal (6), une face (9 ; 10) du corps secondaire (8) dans un mode de conduite sur route et de manière à indiquer, à travers la première ouverture traversante (7) du corps principal (6), l'autre face (10 ; 9) du corps secondaire (8) dans un mode de conduite de performance.

5. Tableau de commande (2) selon l'une des revendications de 1 à 4, la première face (9) du corps secondaire (8) supportant une image imprimée (13).

6. Tableau de commande (2) selon l'une des revendications de 1 à 4, la première face (9) du corps secondaire (8) supportant au moins un premier instrument analogique (14) muni d'au moins une aiguille.

7. Tableau de commande (2) selon l'une des revendications de 1 à 4, la première face (9) du corps secondaire (8) supportant un premier écran numérique (15).

8. Tableau de commande (2) selon l'une des revendications de 1 à 7, la seconde face (10) du corps secondaire (8) supportant au moins un deuxième instrument analogique (16) muni d'au moins une aiguille.

9. Tableau de commande (2) selon l'une des revendications de 1 à 8, le corps principal (6) supportant au moins un second écran numérique (17), qui est disposé à côté de la première ouverture traversante (7) sans chevaucher la première ouverture traversante (7).

10. Tableau de commande (2) selon l'une des revendications de 1 à 8, le corps principal (6) supportant au moins un second écran numérique (17), qui recouvre la première ouverture traversante (7) et possède une seconde ouverture traversante (18), qui est alignée avec la première ouverture traversante (7) et a la même forme et la même taille que la première ouverture traversante (7).

11. Tableau de commande (2) selon l'une des revendications de 1 à 10, le corps principal (6) supportant au moins un troisième instrument analogique (19), qui est muni d'au moins une aiguille et est disposé à côté de la première ouverture traversante (7) sans chevaucher la première ouverture traversante (7).

12. Tableau de commande (2) selon l'une des revendications de 1 à 11 et comprenant un panneau principal transparent (5), qui recouvre le corps principal (6) et est disposé à une distance donnée du corps principal (6) de manière à ne pas interférer avec la rotation du corps secondaire (8).
